# EUROPÄISCHE PATENTSCHRIFT

(11) **EP 1 029 825 B1**
(45) Veröffentlichungstag und Bekanntmachung des Hinweises auf die Patenterteilung: **28.07.2010**
(21) Anmeldenummer: 00101692.2
(22) Anmeldetag: 03.02.2000
(51) Int. Cl.: B67D 1/08, C02F 1/00

(54) **System zur Aufbereitung von Trinkwasser**
System of treating drinking water
Systeme de traitement d'eau potable

(30) Priorität: 19.02.1999 DE 19907056
(43) Veröffentlichungstag der Anmeldung: 23.08.2000
(73) Patentinhaber: BSH Bosch und Siemens Hausgeräte GmbH, 81739 München (DE)
(72) Erfinder: Bednar, Wolfgang, 83115 Neubeuern (DE); Kramer, Siegmund, 83417 Kirchanschöring (DE)

(56) Entgegenhaltungen:
- EP-A- 0 593 876
- DE-A- 2 940 609
- US-A- 3 196 624
- US-A- 4 649 809
- US-A- 4 856 422
- US-A- 5 064 097

## Beschreibung

Die Erfindung betrifft ein System zur Aufbereitung von Trinkwasser nach dem Oberbegriff des Anspruchs 1.

Aus US 3,196,624 ist ein gattungsgemäßes Verfahren zur Herstellung sowie Bevorratung von Eiswürfeln bekannt. Aus US 4,649,809 ist eine Vorrichtung bekannt, die heiße und kalte Getränke bereitstellen kann.

Zur Zubereitung von Getränken und Speisen (einschl. sogenannter Instant-Produkte) wird Trinkwasser unterschiedlicher Temperatur bzw. in einem der drei Aggregatzustände (Eis, flüssiges Wasser, Wasserdampf) benötigt. Für die entsprechende Aufbereitung des Trinkwassers sind Vorrichtungen bekannt, die jedoch nur für eine oder zwei Aufbereitungsarbeiten geeignet sind. So lässt sich beispielsweise mit einem Wasserkocher Trinkwasser nur Erwärmen oder Kochen und mit einem Kühlschrank mit Gefrierfach lassen sich Speisen und Getränke kühlen oder gefrieren. Aus einer herkömmlichen Mischbatterie lässt sich Trinkwasser unterschiedlicher Temperaturen entnehmen, jedoch geht bei einer solchen Wasserentnahme Trinkwasser verloren, sofern Wasser, das nicht die gewünschte Temperatur hat, ungenutzt abgeführt wird. Ein derartiger Umgang mit Trinkwasser ist jedoch aus ökologischen und ökonomischen Gründen nicht zu verantworten.

Zur Aufbereitung von Trinkwasser in mehrere Aggregatzustände sind jeweils entsprechende Vorrichtungen bereitzustellen, die vergleichsweise hohe Kosten und eine vergleichsweise grosse Stellfläche erfordern. Da diese einzelnen, vorbekannten Vorrichtungen, wie beispielsweise ein Wasserkochgefäss und eine Schale für Eiswürfel nicht an das Trinkwassernetz oder an einen gemeinsamen Trinkwasservorratsbehälter angeschlossen sind, erweist sich die Bedienung der Vorrichtungen als vergleichsweise aufwendig, weil stets die Gefässe von einem Abstellplatz zu einem Wasserabgabeort (Wasserhahn, Mischbatterie) zu führen, dort zu befüllen und von diesem Wasserabgabeort zu dem Abstellplatz zurückzuführen sind. Dieser Bedienungsaufwand erhöht sich, wenn der Bedarf an Trinkwasser zunächst falsch eingeschätzt wird und später entweder die Gefässe nachzufüllen sind oder nicht benötigtes Trinkwasser aus den Gefässen zu entfernen ist. Auch in diesen Fällen wird Trinkwasser verschwendet.

Durch die Zusammenführung mehrerer Vorrichtungen zur Aufbereitung des Trinkwassers sind energiesparende Einrichtungen in dem System nötig um eine Überlastung des Elektroanschlusses des Systems vermieden.

Ausgehend von diesem Stand der Technik liegt der Erfindung die Aufgabe zugrunde, ein System zu schaffen, das energiesparend betrieben werden kann und einen bedarfsgerechten Umgang mit Trinkwasser ermöglicht.

Diese Aufgabe wird erfindungsgemäss durch ein System gelöst, das in den Ansprüchen definiert ist.

Die Erfindung ist mit einer Mehrzahl von Vorteilen verbunden.

Das erfindungsgemäße System ist **dadurch gekennzeichnet, dass** eine Einrichtung zur Erwärmung von Trinkwasser thermisch mit einem Verflüssiger einer Einrichtung zur Kühlung von Trinkwasser gekoppelt ist, und dass ein Steuerungsprogramm der Steuereinrichtung in der Weise ausgestaltet ist, dass eine vorgebbare erste Summen-Betriebsleistung der Einrichtungen E1, ..., Em zur Aufbereitung des Trinkwassers nicht überschritten wird, um eine Überlastung eines Elektroanschlusses des Systems zu vermeiden, und um ein vorgebbares Energiemanagement durchzuführen. Damit wird eingesetzte Energie ökonomisch genutzt.

Das erfindungsgemässe System stellt Trinkwasser in unterschiedlichen Aggregatzuständen und in gewünschten Temperaturen bereit, ohne dass zuvor Trinkwasser in anderen als den gewünschten Temperaturen bereit gestellt wird. Damit zeichnet sich das System durch den Vorteil aus, dass Trinkwasser sparsam genutzt wird.

Dies gilt insbesondere für eine vorteilhafte Ausführungsform des erfindungsgemässen Systems, das an den Wasserentnahmestellen Dosiervorrichtungen aufweist. Diese können zu- bzw. abschaltbar sein, so dass dosierte Mengen aufbereiteten Trinkwassers entnommen werden können.

Das erfindungsgemässe System zeichnet sich auch durch den Vorteil aus, dass das wunschgemäss hinsichtlich Temperatur und Aggregatzustand bereitgestellte Trinkwasser innerhalb kurzer Zeit bereitgestellt wird, so dass es sogleich verbraucht oder zum Beispiel zur Zubereitung von Getränken und Speisen ohne Verzögerung weiterverarbeitet werden kann.

Eine vorteilhafte Ausführungsform des erfindungsgemässen Systems ist **dadurch gekennzeichnet, dass** es an ein Trinkwasser-Versorgungsnetz und/oder an einen Trinkwasservorratsbehälter angeschlossen ist. Dies ist unter anderem mit dem Vorteil der einfachen Bedienbarkeit verbunden, da sich ein Transport von Gefässen zu bzw. von einem Wasserabgabeort erübrigt.

Das erfindungsgemässe System kann in den Varianten Auftischgerät, separates Standgerät oder Einbaugerät ausgeführt sein.

In vorteilhafter Weise werden einzelne Aufbereitungseinrichtungen bzw. Funktionseinheiten unter übergeordneten Gesichtspunkten (z.B. ähnliche Zubereitungsprodukte) zu Funktionsgruppen zusammengefasst und jeweils einer gemeinsamen Ausgabevorrichtung zugeordnet. Beispielsweise wird einem Eisbereiter eine Einrichtung zur Ausgabe von Eiswürfeln und/oder von zerkleinertem Eis zugeordnet. Eine weitere Ausgabeeinrichtung kann der Ausgabe von original belassenem Trinkwasser, gekühlten Trinkwasser und erhitztem Trinkwasser dienen.

Auf Grund einer derartigen Zusammenfassung ähnlicher Zubereitungsprodukte zu Funktionsgruppen und einer Reduzierung der Anzahl der Entnahmestellen bzw. Ausgabevorrichtungen werden vorteilhafterweise Kosten minimiert und die Bedienung vereinfacht.

Die Trinkwasseraufbereitungseinrichtungen des Systems können als unabhängige Bausteine bzw. Module aufgebaut sein, so dass das System entsprechend den Bedürfnissen bestückbar ist. Einzelne Module lassen sich abschalten oder entfernen, ohne die Funktion der restlichen Module zu beeinträchtigen.

Erfindungsgemäß weist das System mindestens einen Filter auf. Dieser Filter kann zentral einer Trinkwassereintrittsöffnung zugeordnet sein und steht damit dem Gesamtsystem zur Verfügung. Dieser Filter kann ein Einzelfilter als auch eine Filterkombination sein, bestehend aus Schwebstofffiltern, Granulatkomponenten (Aktivkohle), halbdurchlässige Membranen (Umkehrosmose) bzw. Elementen zur Bestrahlung von evtl. mit Keimen behafteten Wasser (UV-Bestrahlung). Die Filterkomponenten können sowohl einzeln als auch komplett wechselbar gestaltet sein. Ebenso ist eine modulare Bauform zur wasserspezifischen Filterzusammenstellung je nach Wasserqualität möglich.

Unterhalb der Entnahmestellen kann eine Vorrichtung zum Auffangen und Ableiten von Trinkwasserresten vorgesehen sein, so dass der Bedienaufwand weiter verringert wird.

Schließlich sind an das erfindungsgemäße System Vorrichtungen ankoppelbar. Beispiele hierfür sind Kaffeemaschinen, Teemaschinen und Vorrichtungen, mit denen Speisen unter Verwendung von Trinkwasser zubereitet werden.

Die Erfindung wird nun anhand der Zeichnungen beschrieben.

Es zeigt:
- Fig. 1: eine schematische Darstellung des erfindungsgemäßen Systems, und
- Fig. 2: ein Blockschaltbild des Systems nach Figur 1.

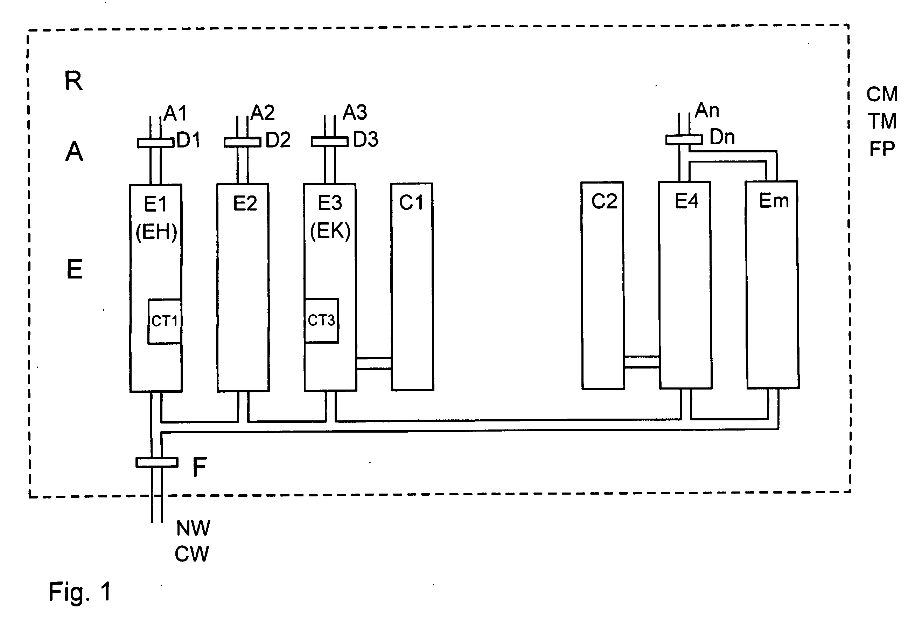

Das in Figur 1 beispielhaft dargestellte System zur Aufbereitung von Trinkwasser weist mindestens eine erste Einrichtung E1 zur Aufbereitung des Trinkwassers in einen ersten Aggregatzustand auf, mindestens eine zweite Einrichtung E2 zur Aufbereitung des Trinkwassers in einen zweiten Aggregatzustand sowie mindestens eine dritte Einrichtung E3 zur Aufbereitung des Trinkwassers in einen dritten Aggregatzustand.

Das System ist an ein Trinkwasser-Versorgungsnetz NW und/oder an einen Trinkwasservorratsbehälter CW anschließbar. Es weist aufbereitungseinrichtungsindividuelle Einrichtungen A1, ..., An zur Ausgabe des Trinkwassers auf Mehr als einer Einrichtung E zur Aufbereitung des Trinkwassers kann genau eine Einrichtung zur Ausgabe des Trinkwassers zugeordnet sein. Beispielsweise ist bei der in Figur 1 dargestellten Ausführungsform den Einrichtungen E4 und Em die gemeinsame Ausgabeeinrichtung An zugeordnet.

Eine Einrichtung zur Erwärmung von Trinkwasser ist vorzugsweise räumlich getrennt von einer Einrichtung zur Kühlung von Trinkwasser angeordnet, wobei aber vorgesehen sein kann, zum Beispiel eine Einrichtung E1 (=EH) zur Erwärmung von Trinkwasser thermisch mit einem Verflüssiger einer Einrichtung E3 (= EK) zur Kühlung von Trinkwasser zur Erzeugung von Eis zu koppeln. Dies in Figur 1 schematisch durch zwei thermische Koppelelemente CT1, CT3 dargestellt, die den Einrichtungen E1 und E3 zugeordnet sind. Insbesondere lassen sich auch Peltier-Elemente für eine energiesparende Kühlung und Erwärmung im System verwenden.

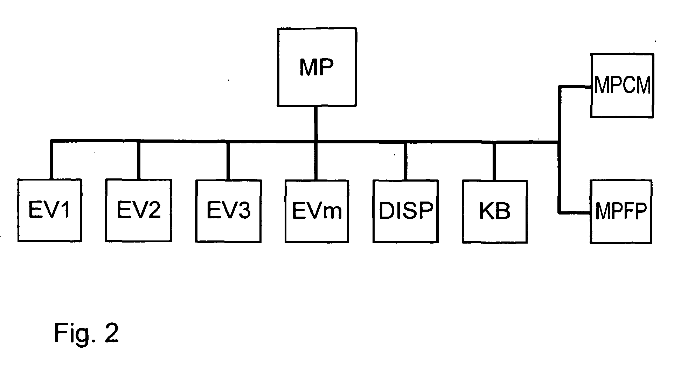

Ganz allgemein gilt, daß im System vorhandene Einrichtungen oder deren Teile für die Zubereitung des Trinkwassers durch andere Einrichtungen mitbenutzt werden. Dies gilt unter anderem für einen Filter F, für eine Einrichtung R zur Ableitung von Wasser sowie für eine zentrale Steuereinrichtung MP (Figur 2).

Das System kann mit einem ersten Behälter C1 zur Bevorratung von Kohlendioxyd und/oder mit einem zweiten Behälter C2 zur Bevorratung von mindestens einem Getränkezusatzmittel (Säfte, Sirup, etc.) verbunden sein und/oder mindestens einen den ersten oder den zweiten Behälter C1, C2 enthalten.

Die Einrichtungen E des Systems können unter anderem folgende Funktionen erfüllen: Eiswürfelbereitung, Zerkleinern von Eiswürfeln, Filtern von Trinkwasser, Versetzen von Trinkwasser mit Kohlendioxyd (Sodatrinkwasserbereitung) und/oder sonstigen Getränkezusätzen, Kühlen von Trinkwasser auf Temperaturen 0° C < T < Umgebungstemperatur, Erwärmen von Trinkwasser auf Temperaturen unterhalb des Kochpunktes, Kochen von Trinkwasser, Erzeugung von Trinkwasserdampf (als Hauptzweck, nicht als Nebenprodukt, erforderlichenfalls überhitzt).

Dementsprechend kann das System folgende Einrichtungen E1, ...Em aufweisen: einen Eiswürfelbereiter, einen Eiszerkleiner, einen Trinkwasserkühler, einen Wasserboiler, einen Wasserkocher, einen Wasserdurchlauferhitzer, und/oder einen Dampfbereiter mit einer Dampfdüse. Das System kann mindestens ein Filter F aufweisen, wobei der Filter F mindestens einer Wassereintrittsöffnung und/oder einer Wasseraustrittsöffnung zugeordnet ist. Der Filter F kann zuschaltbar sein. Weiterhin kann das System eine Entkalkungseinrichtung und/oder eine Einrichtung zur Sterilisierung (z.B. UV-Strahlungsquelle) aufweisen.

Trinkwasseraustrittsöffnungen A des Systems kann mindestens eine Einrichtung R zum Auffangen und/oder Ableiten von Trinkwasser zugeordnet sein.

Insbesondere die Trinkwasseraufbereitungseinrichtungen E des Systems, aber auch andere Systemkomponenten wie z.B. C1, C2 können als unabhängige Bausteine bzw. Module aufgebaut sein, so daß das System bedarfsgerecht bestückbar ist. Einzelne Module lassen sich abschalten oder entfernen, ohne die Funktion der restlichen Module zu beeinträchtigen. Eine Steuereinrichtung MP (Figur 2) des Systems erkennt jeweils den aktuellen Systemausbauzustand und steuert das System entsprechend dem jeweiligen Ausbauzustand.

Das System kann mit mindestens einer Vorrichtung zur Zubereitung von Getränken, zum Beispiel einer Kaffeemaschine CM und/oder einer Teemaschine TM sowie mit mindestens einer Vorrichtung FP zur Zubereitung von Speisen koppelbar ausgestaltet sein. Die ankoppelbaren Vorrichtungen können entweder autonome Geräte sein oder Zubehörvorrichtungen, die für ihre Funktion Einrichtungen des Systems verwenden. Weiterhin kann das System ein Schlagwerk bzw. eine Mixeinrichtung (z.B. ähnlich einem bekannten Stabmixer) aufweisen bzw. können Schlagwerk und Mixeinrichtung an das System ankoppelbar sein.

Weiterhin kann das System eine Steuereinrichtung MP aufweisen, mit der Einrichtungen des Systems und/oder an das System ankoppelbare Einrichtungen steuerbar sind. Die Steuereinrichtung kann ein Mikroprozessor sein, dem ein Steuerungsprogramm zugeordnet ist, mit dem Einrichtungen des Systems und/oder an das System ankoppelbare Einrichtungen steuerbar sind.

In Figur 2 sind thermische und/oder motorische Einheiten der Einrichtungen E (Figur 1) mit EV1, EV2, EV3, ..., EVm bezeichnet. Eine Anzeigeeinrichtung ist mit DISP und Bedienelemente zur Einstellung z.B. von Temperaturen, Menge, Zeiten, sind mit KB bezeichnet. An das System ankoppelbare Einrichtungen, zum Beispiel eine Kaffeemaschine CM, eine Teemaschine TM und eine Vorrichtung FP zur Zubereitung von Speisen können eigenen Steuerungen MPCM, MPCM, MPFP aufweisen, die im angekoppelten Zustand mit der Steuerung MP zusammenarbeiten. In Figur 2 ist eine Struktur dargestellt, bei der zwei Einrichtungen mit eigener Steuerung (z.B: MPCM, MPTM) an die Systemsteuerung MP anschließbar sind.

Das Steuerungsprogramm der Systemsteuerung MP ist unter anderem in der Weise ausgestaltet, daß eine vorgebbare erste Summen-Betriebsleistung der Einrichtungen E1, ..., Em zur Aufbereitung des Trinkwassers und/oder eine vorgebbare zweite Summen-Betriebsleistung sonstiger, leistungsverbrauchender Einrichtungen (zum Beispiel DISP (Figur 2)) nicht überschritten wird. Auf diese Weise wird ein vorgebbares Energiemanagement durchgeführt und eine Überlastung eines Elektroanschlusses des Systems vermieden. In diesem Zusammenhang erhalten Aufbereitungsvorgänge, die kurzfristig durchzuführen sind (zum Beispiel Abgabe von Wasserdampf) Priorität in der Energieversorgung gegenüber anderen Aufbereitungsvorgängen, die langfristig durchzuführen sind (z.B. Zubereitung von Eiswürfeln).

Weiterhin kann das Steuerungsprogramm in der Weise ausgestaltet sein, daß in das System über Bedienelemente KB eingegebene Informationen und/oder auf Anzeigeeinrichtungen DISP anzuzeigende Informationen verarbeitet werden. Ein Bedien- und Anzeigefeld enthält neben Anzeigeeinrichtungen, die Betriebsparameter (Betriebsbereitschaft, Füllstandsanzeigen, ...) anzeigen, zwecks einfacher, barrierefreier Bedienung vorzugsweise nur solche Bedien- und Anzeigeelemente, deren Betätigung bzw. Beobachtung bei jeder Entnahme von Trinkwasserzubereitungen erforderlich ist.

Weitere derartige Bedienelemente, die nur gelegentlich zu bedienen sind, z.B. Änderung von Dosiermengen- und vorwählbaren Temperatureinstellungen, Wechsel von Vorratsbehältern für die Zusätze (Kohlendioxyd, Säfte, Sirup u.dgl.), Filterpatronenwechsel, sind hinter einer auf einfache Weise zu öffnenden Bedien- und Anzeigefront oder einer sonstigen leicht zu öffnenden Abdeckung, auch in einer Form einer Schublade, an der Frontseite eines Systemgehäuses angeordnet.

Das Systemgehäuse ist weiterhin so ausgestaltet, daß auszuwechselnde Einrichtungen, ein oder mehrere Filter, etc. leicht zugänglich sind.

### Bezugszeichenliste

- E; E1, E2, E3, ...Em: Einrichtungen zur Aufbereitung von Trinkwasser
- EH: Einrichtung zur Erwärmung von Trinkwasser
- EK: Einrichtung zur Kühlung von Trinkwasser
- A1,..., An: Einrichtungen zur Ausgabe von Trinkwasser
- NW: Trinkwasser-Versorgungsnetz
- CW: Trinkwasservorratsbehälter
- C1: Behälter zur Bevorratung von Kohlendioxyd
- C2: Behälter zur Bevorratung von Getränkezusatzmitteln
- CT1, CT3: thermische Koppelelemente
- F: Filter
- R: Vorrichtung zum Auffangen/Ableiten von Trinkwasser
- D1, ..., Dn: Dosiereinrichtungen
- CM, TM: Vorrichtung zur Zubereitung von Getränken
- FP: Vorrichtung zur Zubereitung von Speisen
- MP: Steuereinrichtung des Systems, Mikroprozessor
- MPCM, MPTM, MPFP: Steuereinrichtungen von CM. TM und FP
- EV1. EV2. EV3, ..., EVm: thermische und/oder motorische Einheiten von E1, E2, E3, EM
- DISPL: Anzeigeeinrichtung
- KB: Eingabebedienelemente

## Patentansprüche

1. System zur Aufbereitung von Trinkwasser, wobei das System mindestens eine erste Einrichtung (E1) zur Aufbereitung des Trinkwassers in einen ersten Aggregatzustand, mindestens eine zweite Einrichtung (E2) zur Aufbereitung des Trinkwassers in einen zweiten Aggregatzustand, mindestens eine dritte Einrichtung (E3) zur Aufbereitung des Trinkwassers in einen dritten Aggregatzustand, einem ersten Behälter (C1) zur Bevorratung von Kohlendioxyd, eine zweiten Behälter (C2) zur Bevorratung von mindestens einem Getränkezusatzmittel, mindestens einen zuschaltbaren Filter (F), eine Entkalkungseinrichtung, eine Einrichtung zur Sterilisierung von Trinkwasser aufweist und eine Steuereinrichtung,
**dadurch gekennzeichnet,**
**dass** eine Einrichtung (EH) zur Erwärmung von Trinkwasser thermisch mit einem Verflüssiger einer Einrichtung (EK) zur Kühlung von Trinkwasser gekoppelt ist, und
**dass** ein Steuerungsprogramm der Steuereinrichtung in der Weise ausgestaltet ist, dass eine vorgebbare erste Summen-Betriebsleistung der Einrichtungen E1, ..., Em zur Aufbereitung des Trinkwassers nicht überschritten wird, um eine Überlastung eines Elektroanschlusses des Systems zu vermeiden, und um ein vorgebbares Energiemanagement durchzuführen.

2. System nach Anspruch 1, **dadurch gekennzeichnet, dass** es an ein Trinkwasser-Versorgungsnetz (NW) und/oder an einen Trinkwasservorratsbehälter (CW) anschließbar ist.

3. System nach einem der vorstehenden Ansprüche, **dadurch gekennzeichnet, dass** es aufbereitungseinrichtungsindividuelle Einrichtungen (A1,... An) zur Ausgabe des Trinkwassers aufweist.

4. System nach einem der vorstehenden Ansprüche, **dadurch gekennzeichnet, dass** mehr als einer Einrichtung (E1, ... Em) zur Aufbereitung des Trinkwassers eine Einrichtung (A1, ... An) zur Ausgabe des Trinkwassers zugeordnet ist.

5. System nach einem der vorstehenden Ansprüche, **dadurch gekennzeichnet, dass** eine Einrichtung (EH) zur Erwärmung von Trinkwasser räumlich getrennt von einer Einrichtung (EK) zur Kühlung von Trinkwasser angeordnet ist.

6. System nach einem der vorstehenden Ansprüche, **dadurch gekennzeichnet, dass** es einen Eiswürfelbereiter und/oder einen Eiszerkleiner und/oder einen Trinkwasserkühler und/oder einen Trinkwasserboiler und/oder einen Trinkwasserkocher und/oder einen Trinkwasserdurchlauferhitzer und/odereinen Dampfbereiter mit einer Dampfdüse aufweist.

7. System nach Anspruch 1, **dadurch gekennzeichnet, dass** der Filter (F) mindestens einer Trinkwassereintrittsöffnung und/oder einer Trinkwasseraustrittsöffnung zugeordnet ist.

8. System nach einem der vorstehenden Ansprüche, **dadurch gekennzeichnet, dass** Trinkwasseraustrittsöffnungen mindestens eine Einrichtung (R) zum Auffangen und/oder Ableiten von Trinkwasser zugeordnet ist.

9. System nach einem der vorstehenden Ansprüche, **dadurch gekennzeichnet, dass** Trinkwasseraustrittsöffnungen Dosiereinrichtungen (D1, ... Dn) zugeordnet sind.

10. System nach einem der vorstehenden Ansprüche, **dadurch gekennzeichnet, dass** es mit mindestens einer Vorrichtung zur Zubereitung (CM, TM) von Getränken und/oder mit mindestens einer Vorrichtung (FP) zur Zubereitung von Speisen koppelbar ist.

11. System nach einem der vorstehenden Ansprüche, **dadurch gekennzeichnet, dass** es eine Steuereinrichtung (MP) aufweist, mit der Einrichtungen (E1, ... Em) des Systems und an das System ankoppelbare Einrichtungen (CM, TM, FP) steuerbar sind.

12. System nach Anspruch 11, **dadurch gekennzeichnet, dass** die Steuereinrichtung (MP) ein Mikroprozessor (MP) ist, dem ein Steuerungsprogramm zugeordnet ist, mit dem Einrichtungen (E1, ... Em; A1, ... An) des Systems und/oderan das System ankoppelbare Einrichtungen (CM, TM, FP) steuerbar sind.

## Claims

1. System for preparing drinking water, wherein the system comprises at least one first device (E1) for preparing the drinking water in a first aggregate state, at least one second device (E2) for preparing the drinking water in a second aggregate state, at least one third device (E3) for preparing the drinking water in a third aggregate state, a first container (C1) for storing carbon dioxide, a second container (C2) for storing at least one drink additive, at least one connectible filter (F), a decalcifying device, a device for sterilising drinking water and a control device, **characterised in that** a device (EH) for heating drinking water is thermally coupled with a condenser of a device (EK) for cooling drinking water and that a control program of a control device is so constructed that a predeterminable first total operating power of the devices (E1, ... Em) for preparing the drinking water is not exceeded so as to avoid overloading of an electrical connection of the system and to execute a predeterminable energy management.

2. System according to claim 1, **characterised in that** it is connectible with a drinking water supply mains (NW) and/or with a drinking water storage container (CW).

3. System according to any one of the preceding claims, **characterised in that** it comprises devices (A1, ... An), which are individual to preparation device, for delivering the drinking water.

4. System according to any one of the preceding claims, **characterised in that** more than one device (E1, ... Em) for preparing drinking water is associated with a device (A1, ... An) for delivering the drinking water.

5. System according to any one of the preceding claims, **characterised in that** a device (EH) for heating drinking water is arranged to be physically separate from a device (EK) for cooling drinking water.

6. System according to any one of the preceding claims, **characterised in that** it comprises ice-cube preparing means and/or ice-comminuting means and/or a drinking water cooler and/or a drinking water boiler and/or a drinking water boiling device and/or a drinking water throughflow heater and/or steam preparing means with a steam nozzle.

7. System according to claim 1, **characterised in that** at least one drinking water inlet opening and/or drinking water outlet opening is or are associated with the filter (F).

8. System according to any one of the preceding claims, **characterised in that** at least one device (R) for collecting and/or conducting away drinking water is associated with drinking water outlet openings.

9. System according to any one of the preceding claims, **characterised in that** metering devices (D1, ... Dn) are associated with drinking water outlet openings.

10. System according to any one of the preceding claims, **characterised in that** it is couplable with at least one device (CM, TM) for preparing drinks and/or with at least one device (FP) for preparing foodstuffs.

11. System according to any one of the preceding claims, **characterised in that** it comprises a control device (MP) by which devices (E1, ... Em) of the system and devices (CM, TM, FP) couplable to the system are controllable.

12. System according to claim 11, **characterised in that** the control device (MP) is a microprocessor (MP), with which a control program is associated, by which devices (E1, ... Em; A1, ... An) of the system and/or devices (CM, TM, FP) couplable to the system are controllable.

## Revendications

1. Système de traitement d'eau potable, le système comportant au moins un premier dispositif (E1) de traitement de l'eau potable pour faire passer celle-ci à un premier état d'agrégation, au moins un deuxième dispositif (E2) de traitement de l'eau potable pour faire passer celle-ci à un deuxième état d'agrégation, au moins un troisième dispositif (E3) de traitement de l'eau potable pour faire passer celle-ci à un troisième état d'agrégation, un premier récipient (C1) de stockage de dioxyde de carbone, un deuxième récipient (C2) de stockage d'au moins un additif de boisson, au moins un filtre (F) qui peut être mis en circuit, un dispositif de détartrage, un dispositif de stérilisation d'eau potable et un dispositif de commande,
**caractérisé en ce que**
un dispositif (EH) de chauffage d'eau potable est couplé thermiquement à un condenseur d'un dispositif (EK) de refroidissement d'eau potable et
un programme de commande du dispositif de commande est réalisé de manière telle qu'une première puissance de service totale prédéterminable des dispositifs E1, ..., Em de traitement de l'eau potable n'est pas dépassée pour éviter une surcharge d'un raccordement électrique du système et pour exécuter une gestion d'énergie prédéterminable.

2. Système selon la revendication 1, **caractérisé en ce qu'**il peut être raccordé à un réseau d'approvisionnement en eau potable (NW) et/ou à un récipient de stockage d'eau potable (CW).

3. Système selon l'une des revendications précédentes, **caractérisé en ce qu'**il comporte des dispositifs (A1, ..., An) de distribution de l'eau potable individuels aux dispositifs de traitement.

4. Système selon l'une des revendications précédentes, **caractérisé en ce qu'**un dispositif (A1, ..., An) de distribution de l'eau potable est associé à plus d'un dispositif (E1, ..., Em) de traitement de l'eau potable.

5. Système selon l'une des revendications précédentes, **caractérisé en ce qu'**un dispositif (EH) de chauffage d'eau potable est situé de manière séparée dans l'espace par rapport à un dispositif (EK) de refroidissement d'eau potable.

6. Système selon l'une des revendications précédentes, **caractérisé en ce qu'**il comporte une machine à glaçons et/ou pileur de glace et/ou un refroidisseur d'eau potable et/ou un boiler à eau potable et/ou une bouilloire pour eau potable et/ou un chauffe-eau instantané pour eau potable et/ou un générateur de vapeur avec une buse à vapeur.

7. Système selon la revendication 1, **caractérisé en ce que** le filtre (F) est associé au moins à un orifice d'admission d'eau potable et/ou à un orifice de sortie d'eau potable.

8. Système selon l'une des revendications précédentes, **caractérisé en ce qu'**au moins un dispositif (R) de collecte et/ou d'évacuation d'eau potable est affecté aux orifices de sortie d'eau potable.

9. Système selon l'une des revendications précédentes, **caractérisé en ce que** des dispositifs de dosage (D1, ..., Dn) sont affectés à des orifices de sortie d'eau potable.

10. Système selon l'une des revendications précédentes, **caractérisé en ce qu'**il peut être couplé à au moins un dispositif (CM, TM) pour préparer des boissons et/ou à au moins un dispositif (FP) pour préparer des plats.

11. Système selon l'une des revendications précédentes, **caractérisé en ce qu'**il comporte un dispositif de commande (MP) au moyen duquel peuvent être commandés des dispositifs (E1, ..., Em) du système et des dispositifs (CM, TM, FP) qui peuvent être couplés au système.

12. Système selon la revendication 11, **caractérisé en ce que** le dispositif de commande (MP) est un microprocesseur (MP) auquel est associé un programme de commande au moyen duquel peuvent être commandés des dispositifs (E1, ..., Em ; A1, ...,An) du système et/ou des dispositifs (CM, TM, FP) qui peuvent être couplés au système.
